# EUROPEAN PATENT APPLICATION

(11) **EP 4 509 531 A1**
(43) Date of publication of application: **19.02.2025**
(21) Application number: 23788292.3
(22) Date of filing: 10.04.2023
(51) Int. Cl.: C08F 8/04, C08F 212/00, G02B 1/04

(54) **METHOD FOR MANUFACTURING HYDROGENATED POLYMER**

(30) Priority: 11.04.2022 JP 2022065176
(71) Applicant: MITSUBISHI GAS CHEMICAL COMPANY, INC., Chiyoda-ku Tokyo 100-8324 (JP)
(72) Inventor: SATO Hideyuki, Niigata-shi, Niigata 950-3112 (JP); ARAI Hirokatsu, Niigata-shi, Niigata 950-3112 (JP); NAKAMURA Yusuke, Niigata-shi, Niigata 950-3112 (JP); MATSUSHITA Miru, Niigata-shi, Niigata 950-3112 (JP); KATO Noriyuki, Tokyo 100-8324 (JP)
(74) Representative: Vossius & Partner Patentanwälte Rechtsanwälte mbB
(86) International application number: PCT/JP2023/014473
(87) International publication number: WO 2023/199874

(57) **Abstract**

Provided is a method for hydrogenating an aromatic ring (aromatic hydrogenation) of an aromatic vinyl compound polymer in order to obtain a hydrogenated polymer having sufficient heat resistance at a high rate of aromatic hydrogenation. More specifically, provided is a method for producing a hydrogenated polymer by hydrogenating an aromatic ring (aromatic hydrogenation) of an aromatic vinyl compound polymer, the method comprising reducing a hydrogenation catalyst before use.

## Description

### Technical Field

The present invention relates to a method for producing a hydrogenated polymer. More specifically, the present invention relates to a method for producing a hydrogenated polymer by hydrogenating an aromatic ring (aromatic hydrogenation) of an aromatic vinyl compound polymer.

### Background Art

In recent years, polymers including acrylic resins, methacrylic resins, styrenic resins, polycarbonate resins, and cyclic polyolefin resins have been used for various purposes. Particularly, there have been growing demands as optical materials such as optical lenses and optical disc substrates, because of their optical features. This kind of optical material is required to have not only high transparency but a high level of performance excellent in balance of high heat resistance, a low water absorption rate, mechanical physical properties, and the like. The polymers have been variously improved in order to meet such requirements. One example of such improvement includes the hydrogenation (aromatic hydrogenation) of aromatic polymers.

For example, Japanese Patent No. 5540703 (Patent Literature 1) relates to the hydrogenation of an aromatic vinyl compound/(meth)acrylate copolymer. Japanese Patent Laid-Open No. 2014-77044 (Patent Literature 2) relates to a method for producing an aromatic hydrogenated polymer using a sulfur-free starting material. Japanese Patent No. 2890748 (Patent Literature 3) relates to a method for producing a hydrogenated styrenic resin. Japanese Translation of PCT International Application Publication Nos. 2001-527095 (Patent Literature 4), 2002-511501 (Patent Literature 5), and 2002-511508 (Patent Literature 6) each relate to a method for hydrogenating an aromatic polymer. Japanese Patent Nos. 4224655 (Patent Literature 7) and 5007688 (Patent Literature 8) each relate to an alicyclic hydrocarbon copolymer or a polymer having an alicyclic structure and state that these polymers can be obtained by the hydrogenation of an aromatic polymer.

### Citation List

### Patent Literature

Patent Literature 1: JP Patent No. 5540703
Patent Literature 2: JP 2014-77044 A
Patent Literature 3: JP Patent No. 2890748
Patent Literature 4: JP 2001-527095 A
Patent Literature 5: JP 2002-511501 A
Patent Literature 6: JP 2002-511508 A
Patent Literature 7: JP Patent No. 4224655
Patent Literature 8: JP Patent No. 5007688

### Summary of Invention

### Technical Problem

However, aromatic hydrogenation products of styrene or aromatic hydrogenation products of styrene/isoprene copolymers or the like conventionally used do not have sufficient heat resistance. Furthermore, conventional methods for hydrogenating an aromatic ring (aromatic hydrogenation) of an aromatic vinyl compound polymer require reaction for a long time for obtaining a high rate of aromatic hydrogenation.

### Solution to Problem

The present inventors have conducted diligent studies and consequently completed the present invention by finding that in a method for producing a hydrogenated polymer by hydrogenating an aromatic ring (aromatic hydrogenation) of an aromatic vinyl compound polymer, a reaction rate is improved by pre-reducing a catalyst for use in reaction.

Specifically, the present invention includes the following aspects.
<1>
   A method for producing a hydrogenated polymer by hydrogenating an aromatic ring of an aromatic vinyl compound polymer, wherein:
   the aromatic vinyl compound polymer comprising a first monomer unit and a second monomer unit,
   the method comprising:
      reducing a hydrogenation catalyst before use; and
      performing hydrogenation reaction using the aromatic vinyl compound polymer, a solvent, and the hydrogenation catalyst that has undergone reduction treatment to obtain a hydrogenated polymer, wherein
      the solvent is a mixed solvent comprising at least one first solvent and at least one second solvent, wherein
      the first solvent is a solvent that dissolves an unhydrogenated aromatic vinyl compound polymer, and
      the second solvent is a solvent that dissolves the hydrogenated polymer.
<2>
   The method for producing a hydrogenated polymer according to <1>, wherein the at least one first solvent comprises one or more members selected from the group consisting of methyl acetate, ethyl acetate, butyl acetate, and methyl isobutyrate.
<3>
   The method for producing a hydrogenated polymer according to <1> or <2>, wherein the at least one second solvent comprises one or more members selected from the group consisting of cyclohexane, C9 to C10 alkylcyclohexane, C7 to C15 monoalkylcyclohexane, C8 to C15 dialkylcyclohexane, C9 to C15 trialkylcyclohexane, C10 to C15 tetraalkylcyclohexane, cyclooctane, C9 to C15 monoalkylcyclooctane, C10 to C15 dialkylcyclooctane, C11 to C15 trialkylcyclooctane, C12 to C15 tetraalkylcyclooctane, n-octane, and n-decane.
<4>
   The method for producing a hydrogenated polymer according to any of <1> to <3>, wherein the first solvent has a boiling point of 50°C or higher and an ignition point of 400°C or higher.
<5>
   The method for producing a hydrogenated polymer according to any of <1> to <4>, wherein the second solvent has a boiling point of 80°C or higher and an ignition point of 230°C or higher.
<6>
   The method for producing a hydrogenated polymer according to any of <1> to <5>, wherein the first monomer is selected from the group consisting of styrene, α-methylstyrene, chlorostyrene, 4-methylstyrene, 4-tert-butylstyrene, and 4-methoxystyrene.
<7>
   The method for producing a hydrogenated polymer according to any of <1> to <6>, wherein the second monomer is selected from the group consisting of maleic anhydride, butadiene, cyclopentadiene, and isoprene.
<8>
   The method for producing a hydrogenated polymer according to any of <1> to <7>, wherein the aromatic vinyl compound polymer is selected from the group consisting of a copolymer of styrene and maleic anhydride, a copolymer of styrene and butadiene, and a copolymer of styrene and isoprene.
<9>
   The method for producing a hydrogenated polymer according to <8>, wherein the aromatic vinyl compound polymer is a copolymer of styrene and maleic anhydride.
<10>
   The method for producing a hydrogenated polymer according to any of <1> to <9>, wherein in the aromatic vinyl compound polymer, a polymerization ratio (mol%) between the first monomer unit and the second monomer unit is 70:30 or more and less than 100:0.
<11>
   The method for producing a hydrogenated polymer according to any of <1> to <10>, further comprising forming a resin of the polymer by devolatilization extrusion after the hydrogenation reaction.
<12>
   The method for producing a hydrogenated polymer according to any of <1> to <11>, further comprising a concentration step between the hydrogenation reaction and the devolatilization extrusion.
<13>
   The method for producing a hydrogenated polymer according to any of <1> to <12>, wherein a mass ratio of the at least one first solvent to the at least one second solvent (first solvent : second solvent) is 1:9 to 9:1.
<14>
   The method for producing a hydrogenated polymer according to any of <1> to <13>, wherein the hydrogenation catalyst is a solid catalyst on which palladium, platinum, ruthenium, rhodium, or nickel is supported.
<15>
   A method for producing an optical material, comprising a method for producing a hydrogenated polymer according to any of <1> to <14>.
<16>
   The method for producing an optical material according to <15>, wherein the optical material is an optical lens.

### Advantageous Effects of Invention

The method of the present invention can achieve efficient production by improving a hydrogenation reaction rate in a method for producing a hydrogenated polymer by hydrogenating an aromatic ring (aromatic hydrogenation) of an aromatic vinyl compound polymer. Furthermore, the method of the present invention shortens a reaction time and is thereby capable of reducing a damage on the polymer, such as decrease in molecular weight. The method of the present invention can produce a hydrogenated polymer having sufficient heat resistance.

### Brief Description of Drawing

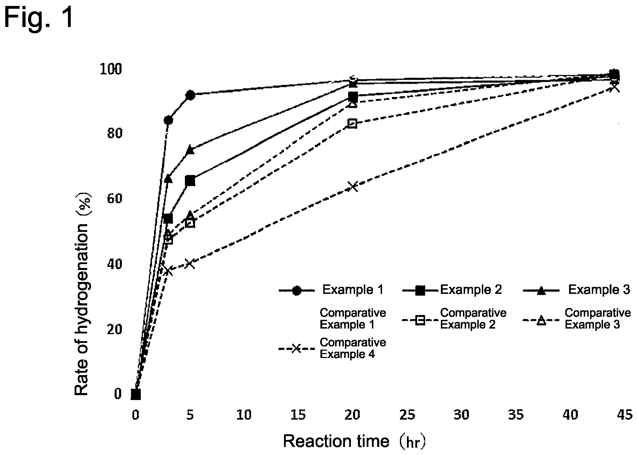

[Figure 1] Figure 1 shows the relationship between a hydrogenation reaction time and a rate of aromatic hydrogenation as to resin 1**.**

### Description of Embodiments

Hereinafter, the present invention will be described in detail. Embodiments given below are mere illustrations for describing the present invention and do not intend to limit the present invention by these embodiments. The present invention can be carried out in various forms without departing from the spirit of the present invention.

### <Method for producing hydrogenated polymer>

An embodiment of the present invention provides a method for producing a hydrogenated polymer by hydrogenating an aromatic ring (aromatic hydrogenation) of an aromatic vinyl compound polymer.

In the method for producing a hydrogenated polymer by hydrogenating an aromatic ring of an aromatic vinyl compound polymer in one embodiment of the present invention,
the aromatic vinyl compound polymer comprises a first monomer unit and a second monomer unit,
the method comprises:
   reducing a hydrogenation catalyst before use; and
   performing hydrogenation reaction using the aromatic vinyl compound polymer, a solvent, and the hydrogenation catalyst that has undergone reduction treatment to obtain a hydrogenated polymer.

### <Aromatic vinyl compound polymer>

The production method according to some embodiments of the present invention relates to a method for producing a hydrogenated polymer by hydrogenating an aromatic ring of an aromatic vinyl compound polymer. In the present specification, the "aromatic vinyl compound polymer" means a polymer comprising a unit derived from an aromatic vinyl compound as a constituent unit. Thus, the aromatic vinyl compound polymer may be a polymer consisting of a unit derived from one aromatic vinyl compound (homopolymer) or may be a copolymer comprising units derived from two or more aromatic vinyl compounds as constituent units or comprising a unit derived from one or more aromatic vinyl compounds and a unit derived from one or more compounds other than aromatic vinyl compounds as constituent units. The unit derived from an aromatic vinyl compound means a unit having a structure where a C=C double bond of a vinyl group in the aromatic vinyl compound is in a state opened by polymerization.

In one embodiment of the present invention, the aromatic vinyl compound polymer described above comprises a first monomer unit and a second monomer unit.

### (Monomer)

The aromatic vinyl compound polymer for use in the production method according to some embodiments of the present invention is not particularly limited. Examples thereof include, but are not limited to, polymers obtained using aromatic vinyl compound monomers including: styrene; alkylstyrene (the alkyl group site preferably has 1 to 5 carbon atoms) such as α-methylstyrene, α-ethylstyrene, o-methylstyrene, m-methylstyrene, p-methylstyrene, 1,3-dimethylstyrene, and p-tert-butylstyrene; p-hydroxystyrene; alkoxystyrene (the alkoxy group site preferably has 1 to 5 carbon atoms) such as p-methoxystyrene, m-butoxystyrene, and p-butoxystyrene; halogenated styrene such as o-chlorostyrene, m-chlorostyrene, p-chlorostyrene, 2,4-dichlorostyrene, and 2,6-dichlorostyrene; and vinylnaphthalene and vinylanthracene. Only one of these monomers may be used, or two or more thereof may be used in combination. In a preferred embodiment of the present invention, styrene is used as an aromatic vinyl compound monomer.

In one embodiment of the present invention, the first monomer is a monomer derived from an aromatic vinyl compound. In one embodiment of the present invention, the first monomer is selected from the group consisting of styrene, α-methylstyrene, chlorostyrene, 4-methylstyrene, 4-tert-butylstyrene, and 4-methoxystyrene. In a preferred embodiment of the present invention, the first monomer is styrene.

The aromatic vinyl compound polymer for use in the production method according to some embodiments of the present invention is a polymer obtained using an aromatic vinyl compound monomer as well as a monomer of a compound other than an aromatic vinyl compound. Examples of such a monomer of a compound other than an aromatic vinyl compound include, but are not limited to, (meth)acrylate, diene, and acid anhydride. Examples of the (meth)acrylate can include, but are not limited to:
(meth)acrylic acid alkyl ester (the alkyl group site preferably has 1 to 20, more preferably 1 to 10, further preferably 1 to 5 carbon atoms) such as methyl (meth)acrylate, ethyl (meth)acrylate, butyl (meth)acrylate, dodecyl (meth)acrylate, and octadecyl (meth) acrylate;
(meth)acrylic acid cycloalkyl ester or cyclic saturated hydrocarbon ester (in both the cases, the number of ring forming carbon atoms is preferably 5 to 20, more preferably 5 to 10) such as cyclohexyl (meth)acrylate and isobornyl (meth)acrylate;
(meth)acrylic acid hydroxy alkyl ester (the alkyl group site preferably has 1 to 20, more preferably 1 to 10, further preferably 1 to 5 carbon atoms) such as (2-hydroxyethyl) (meth)acrylate, (2-hydroxypropyl) (meth)acrylate, and (2-hydroxy-2-methylpropyl) (meth)acrylate;
(meth)acrylic acid alkoxy alkyl ester (the alkyl group site preferably has 1 to 20, more preferably 1 to 10, further preferably 1 to 5 carbon atoms; and the alkoxy group site preferably has 1 to 10, more preferably 1 to 5, further preferably 1 or 2 carbon atoms) such as (2-methoxyethyl) (meth)acrylate and (2-ethoxyethyl) (meth) acrylate;
(meth)acrylic acid phenyl ester such as phenyl (meth) acrylate;
(meth)acrylic acid aryl alkyl ester (the aryl group site preferably has 6 to 10 carbon atoms; and the alkyl group site preferably has 1 to 5 carbon atoms) such as benzyl (meth)acrylate; and
(meth)acrylic acid ester having a phospholipid structure, such as 2-(meth)acryloyloxyethylphosphorylcholine.

One of these (meth)acrylates may be used singly, or two or more thereof may be used in combination. The (meth)acrylate is preferably methyl (meth)acrylate.

Examples of the diene include, but are not limited to, 1,2-butadiene, 1,3-butadiene, 1,2-pentadiene, 1,3-pentadiene, 1,4-pentadiene, 1,2-hexadiene, 1,3-hexadiene, 1,4-hexadiene, 1,5-hexadiene, 1,3-heptadiene, 1,3-octadiene, 1,3-nonadiene, 1,3-decadiene, isoprene, cyclopentadiene, 1,3-cyclohexadiene, and 1,4-cyclohexadiene. One of these dienes may be used singly, or two or more thereof may be used in combination. The diene is preferably conjugated diene, for example, 1,3-butadiene or isoprene.

Examples of the acid anhydride include, but are not limited to, anhydrides of acids such as maleic acid, itaconic acid, citraconic acid, and aconitic acid. The anhydride is preferably maleic anhydride among them.

In one embodiment of the present invention, the second monomer is a monomer derived from a conjugated diene compound. In one embodiment of the present invention, the second monomer is selected from the group consisting of maleic anhydride, butadiene, cyclopentadiene, and isoprene. In a preferred embodiment of the present invention, the second monomer is maleic anhydride.

The aromatic vinyl compound polymer for use in the production method according to some embodiments of the present invention may comprise a monomer other than the first monomer and the second monomer as a constituent without impairing the advantageous effects of the present invention. The aromatic vinyl compound polymer described above may comprise, for example, 0 to 10% or 0 to 5% of the monomer component other than the first monomer and the second monomer in terms of a molar ratio to all monomer components.

In a preferred embodiment of the present invention, the aromatic vinyl compound polymer comprises one or more members selected from the group consisting of a copolymer of styrene and butadiene (1,2-butadiene, 1,3-butadiene, or a combination thereof), a copolymer of styrene and isoprene, a copolymer of styrene and methyl methacrylate, a copolymer of styrene and maleic anhydride, a copolymer of styrene and vinyl acetate, and polystyrene. In another preferred embodiment of the present invention, the aromatic vinyl compound polymer is one polymer selected from the group consisting of a copolymer of styrene and butadiene (1,2-butadiene, 1,3-butadiene, or a combination thereof), a copolymer of styrene and isoprene, a copolymer of styrene and methyl methacrylate, a copolymer of styrene and maleic anhydride, a copolymer of styrene and vinyl acetate, and polystyrene. These polymers may be obtained by polymerizing their respective monomers as mentioned later, or commercially available products may be used. For example, "GPPS HF77" manufactured by PS Japan Corp. can be used as polystyrene.

In one embodiment of the present invention, the aromatic vinyl compound polymer is selected from the group consisting of a copolymer of styrene and maleic anhydride, a copolymer of styrene and butadiene, and a copolymer of styrene and isoprene. In a preferred embodiment of the present invention, the aromatic vinyl compound polymer is a copolymer of styrene and maleic anhydride.

### (Method for producing aromatic vinyl compound polymer)

The aromatic vinyl compound polymer can be produced by polymerizing various monomers. A method for polymerizing one or more aromatic vinyl compounds or a method for copolymerizing an aromatic vinyl compound with a monomer other than an aromatic vinyl compound monomer is not particularly limited, and a known method such as radical polymerization, ionic polymerization, or coordinated polymerization can be used. A radical polymerization method is industrially convenient and preferred. A known method such as bulk polymerization, solution polymerization, emulsion polymerization, or suspension polymerization can be appropriately selected as the radical polymerization method. Examples of the bulk polymerization method or the solution polymerization method include a continuous polymerization method of mixing a monomer component, a chain transfer agent, and a polymerization initiator (and further, a solvent for the solution polymerization method), and continuously supplying the resulting monomer composition to a complete mixing tank, followed by polymerization at 100 to 180°C. Examples of the solvent for use in the solution polymerization method include, but are not limited to:
hydrocarbon solvents such as toluene, xylene, cyclohexane, and methylcyclohexane;
ester solvents such as ethyl acetate;
ketone solvents such as acetone and methyl ethyl ketone;
ether solvents such as tetrahydrofuran and 1,4-dioxane; and
alcohol solvents such as methanol and isopropanol. The reaction mixture after polymerization is discharged from the complete mixing tank and introduced to a devolatilization extruder or a reduced-pressure devolatilization tank where volatile matter (the monomer component and the solvent, etc.) can be distilled off to obtain a polymer of the aromatic vinyl compound or a copolymer of the aromatic vinyl compound and the monomer other than an aromatic vinyl compound monomer (these are also collectively referred to as the "aromatic vinyl compound polymer" simply).

In one embodiment of the present invention, the polymerization ratio (mol%) between the first monomer unit and the second monomer unit constituting the aromatic vinyl compound polymer can be 70:30 or more and less than 100:0.

In an embodiment of the present invention, the polymerization ratio (mol%) between the first monomer unit and the second monomer unit constituting the aromatic vinyl compound polymer can be, for example, 70:30 or more, 75:25 or more, 80:20 or more, 85:15 or more, 86:14 or more, 87:13 or more, 88:12 or more, 89:11 or more, 90:10 or more, 91:9 or more, 92:8 or more, 93:7 or more, 94:6 or more, 95:5 or more, 96:4 or more, 97:3 or more, 98:2 or more, or 99:1 or more.

In an embodiment of the present invention, the polymerization ratio (mol%) between the first monomer unit and the second monomer unit constituting the aromatic vinyl compound polymer can be, for example, less than 100:0, 99:1 or less, 98:2 or less, 97:3 or less, 96:4 or less, 95:5 or less, 94:6 or less, 93:7 or less, 92:8 or less, 91:9 or less, 90:10 or less, 89:11 or less, 88:12 or less, 87:13 or less, 86:14 or less, 85:15 or less, 80:20 or less, or 75:25 or less.

In one embodiment of the present invention, the polymerization ratio (mol%) between the first monomer unit and the second monomer unit constituting the aromatic vinyl compound polymer is 70:30 or more and less than 100:0. In an embodiment of the present invention, the polymerization ratio (mol%) between the first monomer unit and the second monomer unit constituting the aromatic vinyl compound polymer can be any of, for example,
70:30 or more and less than 100:0, 75:25 or more and less than 100:0, 80:20 or more and less than 100:0, 85:15 or more and less than 100:0, 86:14 or more and less than 100:0, 87:13 or more and less than 100:0, 88:12 or more and less than 100:0, 89:11 or more and less than 100:0, 90:10 or more and less than 100:0, 91:9 or more and less than 100:0, 92:8 or more and less than 100:0, 93:7 or more and less than 100:0, 94:6 or more and less than 100:0, 95:5 or more and less than 100:0, 96:4 or more and less than 100:0, 97:3 or more and less than 100:0, 98:2 or more and less than 100:0, or 99:1 or more and less than 100:0;
70:30 or more and 99:1 or less, 75:25 or more and 99:1 or less, 80:20 or more and 99:1 or less, 85:15 or more and 99:1 or less, 86:14 or more and 99:1 or less, 87:13 or more and 99:1 or less, 88:12 or more and 99:1 or less, 89:11 or more and 99:1 or less, 90:10 or more and 99:1 or less, 91:9 or more and 99:1 or less, 92:8 or more and 99:1 or less, 93:7 or more and 99:1 or less, 94:6 or more and 99:1 or less, 95:5 or more and 99:1 or less, 96:4 or more and 99:1 or less, 97:3 or more and 99:1 or less, 98:2 or more and 99:1 or less;
70:30 or more and 98:2 or less, 75:25 or more and 98:2 or less, 80:20 or more and 98:2 or less, 85:15 or more and 98:2 or less, 86:14 or more and 98:2 or less, 87:13 or more and 98:2 or less, 88:12 or more and 98:2 or less, 89:11 or more and 98:2 or less, 90:10 or more and 98:2 or less, 91:9 or more and 98:2 or less, 92:8 or more and 98:2 or less, 93:7 or more and 98:2 or less, 94:6 or more and 98:2 or less, 95:5 or more and 98:2 or less, 96:4 or more and 98:2 or less, 97:3 or more and 98:2 or less;
70:30 or more and 97:3 or less, 75:25 or more and 97:3 or less, 80:20 or more and 97:3 or less, 85:15 or more and 97:3 or less, 86:14 or more and 97:3 or less, 87:13 or more and 97:3 or less, 88:12 or more and 97:3 or less, 89:11 or more and 97:3 or less, 90:10 or more and 97:3 or less, 91:9 or more and 97:3 or less, 92:8 or more and 97:3 or less, 93:7 or more and 97:3 or less, 94:6 or more and 97:3 or less, 95:5 or more and 97:3 or less, 96:4 or more and 97:3 or less;
70:30 or more and 96:4 or less, 75:25 or more and 96:4 or less, 80:20 or more and 96:4 or less, 85:15 or more and 96:4 or less, 86:14 or more and 96:4 or less, 87:13 or more and 96:4 or less, 88:12 or more and 96:4 or less, 89:11 or more and 96:4 or less, 90:10 or more and 96:4 or less, 91:9 or more and 96:4 or less, 92:8 or more and 96:4 or less, 93:7 or more and 96:4 or less, 94:6 or more and 96:4 or less, 95:5 or more and 96:4 or less;
70:30 or more and 95:5 or less, 75:25 or more and 95:5 or less, 80:20 or more and 95:5 or less, 85:15 or more and 95:5 or less, 86:14 or more and 95:5 or less, 87:13 or more and 95:5 or less, 88:12 or more and 95:5 or less, 89:11 or more and 95:5 or less, 90:10 or more and 95:5 or less, 91:9 or more and 95:5 or less, 92:8 or more and 95:5 or less, 93:7 or more and 95:5 or less, 94:6 or more and 95:5 or less;
70:30 or more and 94:6 or less, 75:25 or more and 94:6 or less, 80:20 or more and 94:6 or less, 85:15 or more and 94:6 or less, 86:14 or more and 94:6 or less, 87:13 or more and 94:6 or less, 88:12 or more and 94:6 or less, 89:11 or more and 94:6 or less, 90:10 or more and 94:6 or less, 91:9 or more and 94:6 or less, 92:8 or more and 94:6 or less, 93:7 or more and 94:6 or less;
70:30 or more and 93:7 or less, 75:25 or more and 93:7 or less, 80:20 or more and 93:7 or less, 85:15 or more and 93:7 or less, 86:14 or more and 93:7 or less, 87:13 or more and 93:7 or less, 88:12 or more and 93:7 or less, 89:11 or more and 93:7 or less, 90:10 or more and 93:7 or less, 91:9 or more and 93:7 or less, 92:8 or more and 93:7 or less;
70:30 or more and 92:8 or less, 75:25 or more and 92:8 or less, 80:20 or more and 92:8 or less, 85:15 or more and 92:8 or less, 86:14 or more and 92:8 or less, 87:13 or more and 92:8 or less, 88:12 or more and 92:8 or less, 89:11 or more and 92:8 or less, 90:10 or more and 92:8 or less, 91:9 or more and 92:8 or less;
70:30 or more and 91:9 or less, 75:25 or more and 91:9 or less, 80:20 or more and 91:9 or less, 85:15 or more and 91:9 or less, 86:14 or more and 91:9 or less, 87:13 or more and 91:9 or less, 88:12 or more and 91:9 or less, 89:11 or more and 91:9 or less, 90:10 or more and 91:9 or less;
70:30 or more and 90:10 or less, 75:25 or more and 90:10 or less, 80:20 or more and 90:10 or less, 85:15 or more and 90:10 or less, 86:14 or more and 90:10 or less, 87:13 or more and 90:10 or less, 88:12 or more and 90:10 or less, 89:11 or more and 90:10 or less;
70:30 or more and 89:11 or less, 75:25 or more and 89:11 or less, 80:20 or more and 89:11 or less, 85:15 or more and 89:11 or less, 86:14 or more and 89:11 or less, 87:13 or more and 89:11 or less, 88:12 or more and 89:11 or less;
70:30 or more and 88:12 or less, 75:25 or more and 88:12 or less, 80:20 or more and 88:12 or less, 85:15 or more and 88:12 or less, 86:14 or more and 88:12 or less, 87:13 or more and 88:12 or less;
70:30 or more and 87:13 or less, 75:25 or more and 87:13 or less, 80:20 or more and 87:13 or less, 85:15 or more and 87:13 or less, 86:14 or more and 87:13 or less;
70:30 or more and 86:14 or less, 75:25 or more and 86:14 or less, 80:20 or more and 86:14 or less, 85:15 or more and 86:14 or less;
70:30 or more and 85:15 or less, 75:25 or more and 85:15 or less, 80:20 or more and 85:15 or less;
70:30 or more and 80:20 or less, or 75:25 or more and 80:20 or less; or
70:30 or more and 75:25 or less.

The weight average molecular weight of the aromatic vinyl compound polymer for use in some embodiments of the present invention is preferably 10,000 to 1,000,000, more preferably 50,000 to 700,000, further preferably 100,000 to 500,000, particularly preferably 130,000 to 250,000. A polymer having a weight average molecular weight of smaller than 10,000 or larger than 1,000,000 may be aromatic hydrogenated by the method according to some embodiments of the present invention. However, a copolymer having a weight average molecular weight that falls within the above range is preferred because of its sufficient mechanical strength, workability, moderate viscosity, and easy handling. In the present specification, the weight average molecular weight is a polystyrene-based value determined by gel permeation chromatography (GPC) with tetrahydrofuran as a solvent.

### <Hydrogenation>

In the present specification, the "hydrogenation of an aromatic vinyl compound polymer" means reaction to add hydrogen to an aromatic ring of the aromatic vinyl compound polymer. For example, a benzene ring is reduced into cyclohexane. Such hydrogenation is also referred to as aromatic hydrogenation.

### (Solvent)

The aromatic vinyl compound polymer for use in some embodiments of the present invention is dissolved in an appropriate solvent and hydrogenated. Points to be taken into consideration for solvent selection are favorable solubility of the polymer before and after hydrogenation (i.e., both of the aromatic polymer and a hydrogenated polymer) and the absence of a hydrogenation site in the solvent. The solvent more preferably accelerates reaction. This is because an improved hydrogenation rate shortens a reaction time and is capable of reducing a damage on the polymer, such as decrease in molecular weight. On the assumption that the solvent component is devolatilized after hydrogenation, the solvent preferably has a high ignition point. If a devolatilization extrusion step can be performed, this is preferred because a hydrogenated polymer can be efficiently produced.

The solvent for use in the production method according to some embodiments of the present invention is a mixed solvent comprising at least one first solvent and at least one second solvent. In this context, the first solvent preferably offers high solubility of an unhydrogenated polymer, and the second solvent preferably offers high solubility of a hydrogenated polymer. However, the solubility of a polymer in a solvent is not easy to predict, and just because such two types of solvents are mixed does not mean that the resulting solvent always favorably dissolves the polymer before and after hydrogenation reaction.

In one embodiment of the present invention, the solvent is a mixed solvent comprising at least one first solvent and at least one second solvent, wherein
the first solvent is a solvent that dissolves an unhydrogenated aromatic vinyl compound polymer, and
the second solvent is a solvent that dissolves the hydrogenated polymer.

In one embodiment of the present invention, the at least one first solvent can be an ester solvent. In one embodiment of the present invention, the at least one first solvent comprises one or more members selected from the group consisting of methyl acetate, ethyl acetate, butyl acetate, and methyl isobutyrate. In one embodiment of the present invention, the first solvent is methyl acetate. In another embodiment of the present invention, the first solvent is ethyl acetate. In a further alternative embodiment of the present invention, the first solvent is butyl acetate. In a further alternative embodiment of the present invention, the first solvent is methyl isobutyrate. In a preferred embodiment of the present invention, the first solvent is methyl isobutyrate.

In one embodiment of the present invention, the first solvent has a boiling point of 50°C or higher and an ignition point of 400°C or higher. Use of such a solvent having a high boiling point and ignition point enables a devolatilization extrusion step to be performed and is thus efficient. Examples of such a solvent include, but are not limited to, methyl isobutyrate, ethyl acetate, and butyl acetate.

In one embodiment of the present invention, the at least one second solvent can be a hydrocarbon solvent. In one embodiment of the present invention, the at least one second solvent comprises one or more members selected from the group consisting of cyclohexane, C9 to C10 alkylcyclohexane, C7 to C15 monoalkylcyclohexane, C8 to C15 dialkylcyclohexane, C9 to C15 trialkylcyclohexane, C10 to C15 tetraalkylcyclohexane, cyclooctane, C9 to C15 monoalkylcyclooctane, C10 to C15 dialkylcyclooctane, C11 to C15 trialkylcyclooctane, C12 to C15 tetraalkylcyclooctane, n-octane, and n-decane.

In one embodiment of the present invention, the second solvent has a boiling point of 80°C or higher and an ignition point of 230°C or higher. Use of such a solvent having a high boiling point and ignition point enables a devolatilization extrusion step to be performed and is thus efficient. Examples of such a solvent include cyclohexane, cyclopentane, methylcyclohexane, n-heptane, 2,2,4-trimethylpentane, cyclooctane, 1,3-dimethylcyclohexane, ethylcyclohexane, 1,2,4-trimethylcyclohexane, decalin (cis,trans-decahydronaphthalene), and SWA Clean 150.

In one embodiment of the present invention, the mass ratio of the at least one first solvent to the at least one second solvent (first : second) is 1:9 to 9:1. In some embodiments of the present invention, the mass ratio of the at least one first solvent to the at least one second solvent (first solvent : second solvent) can be, for example,
1:9 to 9:1, 1:9 to 8:2, 1:9 to 7:3, 1:9 to 6:4, 1:9 to 5:5, 1:9 to 4:6, 1:9 to 3:7, 1:9 to 2:8;
2:8 to 9:1, 2:8 to 8:2, 2:8 to 7:3, 2:8 to 6:4, 2:8 to 5:5, 2:8 to 4:6, 2:8 to 3:7;
3:7 to 9:1, 3:7 to 8:2, 3:7 to 7:3, 3:7 to 6:4, 3:7 to 5:5, 3:7 to 4:6;
4:6 to 9:1, 4:6 to 8:2, 4:6 to 7:3, 4:6 to 6:4, 4:6 to 5:5;
5:5 to 9:1, 5:5 to 8:2, 5:5 to 7:3, 5:5 to 6:4;
6:4 to 9:1, 6:4 to 8:2, 6:4 to 7:3;
7:3 to 9:1, or 7:3 to 8:2; or
8:2 to 9:1.

When the aromatic vinyl compound polymer is polystyrene, the first solvent : second solvent ratio is preferably 1:9 to 5:5. When the aromatic vinyl compound polymer is a copolymer of styrene and methyl methacrylate, the first solvent : second solvent ratio is preferably 3:7 to 7:3. When the aromatic vinyl compound polymer is a copolymer of styrene and maleic anhydride, the first solvent : second solvent ratio is preferably 3:7 to 9:1. When the aromatic vinyl compound polymer is a copolymer of styrene and butadiene or isoprene, the first solvent : second solvent ratio is preferably 1:9 to 7:3.

### (Hydrogenation catalyst)

Examples of the active ingredient of the hydrogenation catalyst for use in some embodiments of the present invention include metal elements having catalytic hydrogenation ability (hereinafter, referred to as "specified metal components"). Examples of the specified metal component include, but are not limited to, nickel, cobalt, iron, ruthenium, rhodium, palladium, platinum, iridium, copper, silver, molybdenum, tungsten, chromium, and rhenium. The specified metal component may be in a metallic state or may be in a cationic state as long as the specific metal component exhibits hydrogenation ability. Among them, a metallic state is preferred because the metallic state generally has stronger hydrogenation ability and is stable in a reducing atmosphere. These specified metal components can be used each singly or in combination of two or more in a state contained in a solid catalyst. In the case of using two or more specified metal components, their combination, mixing ratio, and form are not particularly limited, and the specified metal components can be used in a form such as a mixture of the individual metals, or an alloy or an intermetallic compound. In some embodiments of the present invention, the hydrogenation catalyst is preferably a solid catalyst on which one or more members selected from the group consisting of palladium, platinum, ruthenium, rhodium, and nickel are supported, particularly preferably a palladium-supported solid catalyst.

The starting material of such a specified metal component is not particularly limited, and a starting material that is used in preparing a catalyst by a conventionally known method can be adopted. Examples of such a starting material include hydroxide, oxide, fluoride, chloride, bromide, iodide, sulfate, nitrate, acetate, ammine complexes, and carbonyl complexes of each metal element. These starting materials can be used each singly or in combination of two or more.

In the hydrogenation catalyst for use in some embodiments of the present invention, the specified metal component may be used singly as a metal component or may be used in combination with a metal having no catalytic hydrogenation ability. Examples thereof include catalysts such as palladium black and platinum black constituted by fine metal powders of the specified metal component, and sponge catalysts prepared by forming an alloy from the specified metal component, aluminum, and a small amount of an additive, and then wholly or partially leaching the aluminum.

A compound (hereinafter, referred to as a specified additive component) of one or two or more elements selected from the group consisting of lithium, sodium, potassium, rubidium, and cesium as alkali metal elements, magnesium, calcium, strontium, and barium as alkaline earth metal elements, fluorine, chlorine, bromine, and iodine as halogen elements, and mercury, lead, bismuth, tin, tellurium, and antimony as auxiliary additive elements may be added, together with the specified metal component mentioned above, to the catalyst for use in order to further improve the activity, selectivity, and physical properties, etc. of the catalyst.

The starting material of such a specified additive component is not particularly limited, and a starting material that is used in preparing a catalyst by a conventionally known method can be adopted. Examples of such a starting material include hydroxide, oxide, fluoride, chloride, bromide, iodide, sulfate, nitrate, acetate, and ammine complexes of each metal element. These starting materials can be used each singly or in combination of two or more. A method for adding the specified additive component and the ratio between the specified additive component and the specified metal component are not particularly limited.

In the hydrogenation catalyst for use in some embodiments of the present invention, the specified metal component may be used in combination with a non-metallic substance. Examples of the non-metallic substance typically include single elements, carbide, nitride, oxide, hydroxide, sulfate, carbonate, and phosphate (hereinafter, collectively referred to as a "specified non-metallic component"). Specific examples thereof include graphite, diamond, active carbon, silicon carbide, silicon nitride, aluminum nitride, boron nitride, boron oxide, aluminum oxide (alumina), silicon oxide (silica), titanium oxide, zirconium oxide, hafnium oxide, lanthanum oxide, cerium oxide, yttrium oxide, niobium oxide, magnesium silicate, calcium silicate, magnesium aluminate, calcium aluminate, zinc oxide, chromium oxide, aluminosilicate, aluminosilicophosphate, aluminophosphate, borophosphate, magnesium phosphate, calcium phosphate, strontium phosphate, apatite hydroxide (calcium hydroxyphosphate), apatite chloride, apatite fluoride, calcium sulfate, barium sulfate, and barium carbonate. These specified non-metallic components can be used each singly or in combination of two or more. In the case of using two or more specified non-metallic components in combination, their combination, mixing ratio, and form are not particularly limited, and the specified non-metallic components can be used in a form such as a mixture, a complex compound, or a double salt of the individual compounds.

The specified non-metallic component is preferably obtained conveniently and inexpensively from the viewpoint of industrial use. Such a specified non-metallic component is preferably a zirconium compound, an aluminum compound, or an apatite compound, more preferably a zirconium compound or an apatite compound. Among them, zirconium oxide and apatite hydroxide (calcium hydroxyphosphate) are particularly preferred. Such a specified non-metallic component partially or wholly modified or ion-exchanged with the specified additive component mentioned above can also be used.

For example, carbide, nitride, or oxide of the specified metal component may be used as the specified non-metallic component. However, these components are partially reduced into metals when exposed to a hydrogen reducing atmosphere. In such a case, therefore, some of the components are used as the specified metal component while the remaining components are used as the non-metallic component. Examples of such a case include oxide such as nickel oxide, iron oxide, cobalt oxide, molybdenum oxide, tungsten oxide, and chromium oxide.

In the hydrogenation catalyst for use in some embodiments of the present invention, the specified metal component may be used singly, or the specified metal component and the specified non-metallic component may be used in combination. In some cases, the specified additive component may be contained in addition to these components. A method for producing the hydrogenation catalyst for use in some embodiments of the present invention is not particularly limited, and a conventionally known method can be used. Examples thereof include a method of impregnating the specified non-metallic component with a starting material compound of the specified metal component (supporting method), a method of dissolving a starting material compound of the specified metal component and a starting material compound of the specified non-metallic component together in an appropriate solvent, followed by simultaneous deposition using an alkali compound or the like (coprecipitation method), and a method of mixing and homogenizing a starting material compound of the specified metal component and the specified non-metallic component at an appropriate ratio (kneading method).

Depending on the composition of the hydrogenation catalyst or the convenience of a catalyst preparation method, the specified metal component may be prepared in a cationic state and then prepared into a metallic state by reduction treatment. A reduction method and a reducing agent for this purpose are not particularly limited, and conventionally known ones can be used. Examples of the reducing agent include reducing inorganic gases such as hydrogen gas, carbon monoxide gas, ammonia, hydrazine, phosphine, and silane, lower oxygen-containing compounds such as methanol, formaldehyde, and formic acid, and hydrogenation products such as sodium borohydride and lithium aluminum hydride. In a gas phase or a liquid phase containing such a reducing agent, the specified metal component in a cationic state is subjected to reduction treatment so that the specified metal component is converted to a metallic state. Conditions for this reduction treatment can be set to suitable conditions depending on the types or quantities, etc. of the specified metal component and the reducing agent. The operation of this reduction treatment may be performed separately using a catalytic reduction apparatus before hydrogenation reduction in the production method according to some embodiments of the present invention, or may be performed before the start of reaction or simultaneously with reaction operation in a reactor for use in the production method according to some embodiments of the present invention.

The metal content and shape of the hydrogenation catalyst for use in some embodiments of the present invention are not particularly limited. The shape may be a powdery shape or a molded article. In the case of molding, the shape and a molding method are not particularly limited. For example, a spherical product, a compression-molded product, and an extrusion-molded product as well as a shape obtained by disrupting such a product into an appropriate size can be appropriately selected and used.

The specified metal component is particularly preferably palladium. The catalyst using palladium will be described in detail below. When the specified metal component is palladium, a small amount of palladium used and effective utilization thereof are economically desirable in consideration of palladium being a noble metal. Hence, palladium is preferably dispersed and supported by a catalyst support for use.

A palladium compound soluble in water or an organic solvent is suitable as a palladium compound serving as a starting material of palladium. Examples of such a palladium compound include palladium chloride, tetrachloropalladium salt, tetraammine palladium salt, palladium nitrate, and palladium acetate. Among them, palladium chloride is preferred because of its high solubility in water or an organic solvent and easy industrial availability. Palladium chloride can be dissolved in an aqueous sodium chloride solution, dilute hydrochloric acid, ammonia water, or the like for use.

Palladium or the palladium compound is fixed on a catalyst support, for example, by adding a solution of the palladium compound to the catalyst support or by dipping the catalyst support in a solution of the palladium compound. The fixing method is generally a method such as adsorption to the support, crystallization by distilling off the solvent, or deposition using a reducing substance and/or a basic substance that acts on the palladium compound, and a suitable method is appropriately used. The content of palladium in the hydrogenation catalyst prepared by such a method is preferably 0.01 to 20% by mass, more preferably 0.1 to 10% by mass, further preferably 0.5 to 5% by mass, in terms of metal palladium based on the total amount of the hydrogenation catalyst. The palladium content of 0.01% by mass or more produces a more sufficient hydrogenation rate and further enhances the rate of conversion of the aromatic vinyl compound polymer. On the other hand, the palladium content of 20% by mass or less further enhances the dispersion efficiency of palladium in the hydrogenation catalyst. Therefore, palladium can be used more effectively.

Depending on the convenience of a palladium compound or catalyst preparation method, palladium may be supported in a cationic state, not in a metallic state, by a support. In this case, the supported cationic palladium (e.g., present in the state of a palladium compound) may be reduced into metal palladium and then used. A reduction method and a reducing agent for this purpose are not particularly limited, and conventionally known ones can be adopted. Examples of the reducing agent include reducing inorganic gases such as hydrogen gas, carbon monoxide gas, ammonia, and hydrazine, lower oxygen-containing compounds such as methanol, formaldehyde, and formic acid, hydrocarbon compounds such as ethylene, propylene, benzene, and toluene, and hydrogenation products such as sodium borohydride and lithium aluminum hydride. The cationic palladium can be easily reduced into metal palladium by contact with the reducing agent in a gas phase or a liquid phase. Conditions for this reduction treatment can be set to suitable conditions depending on the type or quantity, etc. of the reducing agent. The operation of this reduction treatment may be performed separately using a catalytic reduction apparatus before hydrogenation reduction in the production method according to the present embodiment, or may be performed before the start of reaction or simultaneously with reaction operation in a reactor for use in the production method of the present embodiment.

One of the preferred specified non-metallic components for use together with the specified metal component is a zirconium compound. The hydrogenation catalyst containing the zirconium compound will be described in detail below. The zirconium compound for use in some embodiments of the present invention is preferably one member or a combination of two or more members selected from the group consisting of zirconium oxide, zirconium hydroxide, zirconium carbonate, alkaline earth zirconate, rare earth zirconate, and zircon.

The zirconium compound is particularly preferably zirconium oxide, and its production method is not particularly limited. A known general method is, for example, a preparation method of decomposing an aqueous solution of soluble zirconium salt with a basic substance to prepare zirconium hydroxide or zirconium carbonate, followed by thermal decomposition. In this respect, examples of the starting material of the zirconium compound include, but are not limited to, zirconium oxychloride, zirconium oxynitrate, zirconium chloride, zirconium sulfate, zirconium tetraalkoxide, zirconium acetate, and zirconium acetylacetonate. These starting materials can be used each singly or in combination of two or more. Examples of the basic substance for use in decomposition include ammonia, alkylamines, ammonium carbonate, ammonium bicarbonate, sodium hydroxide, sodium carbonate, sodium bicarbonate, potassium hydroxide, potassium carbonate, potassium bicarbonate, magnesium hydroxide, calcium hydroxide, lanthanum hydroxide, yttrium hydroxide, and cerium hydroxide. These basic substances can be used each singly or in combination of two or more.

In the case of using zirconium oxide as the specified non-metallic component, its physical properties, shape, and the like are not particularly limited. The purity of zirconium oxide is not particularly limited, and a commercially available product having purity from a general purpose to the level of a highly pure product can be appropriately used.

When the specified non-metallic component typified by a zirconium compound is used as a catalyst support, the shape of such a support, its physical property values such as particle size and porosity, a method for supporting a metal component, and the like are not particularly limited. For example, a shape, support physical properties, and a supporting method suitable for a reaction scheme or conditions can be appropriately selected and used.

The hydrogenation catalyst used is preferably subjected to reduction treatment before being used in hydrogenation reaction. The reduction treatment performed before use in hydrogenation reaction can improve the efficiency of hydrogenation reaction. In one embodiment of the present invention, the hydrogenation catalyst is a hydrogenation catalyst that has undergone reduction treatment.

### (Other reaction conditions)

The concentration of a copolymer (aromatic polymer + aromatic hydrogenated polymer) in a solution at the time of aromatic hydrogenation reaction is usually 1 to 50% by mass, preferably 3 to 30% by mass, further preferably 5 to 25% by mass. When the upper limit of the concentration of the copolymer is equal to or less than the predetermined value, decrease in reaction rate, inconvenient handling ascribable to elevated solution viscosity, and the like can be circumvented. Alternatively, it is preferred that the lower limit value of the concentration should be equal to or more than the predetermined value, from the viewpoint of productivity and/or economy.

The hydrogenation reaction in the production method according to some embodiments of the present invention is performed using a starting material solution of the aromatic vinyl compound polymer dissolved in the solvent, and can be any reaction in a suspended bed or a fixed bed. A known approach such as batch reaction or continuous flow reaction can be used. In the case of performing suspended-bed reaction, the particle size of the support is usually in the range of 0.1 to 1,000 µm, preferably 1 to 500 µm, further preferably 5 to 200 µm. The particle size equal to or larger than the predetermined size facilitates catalyst separation after hydrogenation reaction. When the upper limit of the particle size is equal to or less than the predetermined value, decrease in reaction rate can be prevented.

The reaction conditions preferably involve a temperature of 60 to 250°C, a hydrogen pressure of 3 to 30 MPa, and a reaction time of 3 to 30 hours. The reaction temperature equal to or higher than the predetermined temperature accelerates a reaction rate. When the upper limit of the reaction temperature is equal to or lower than the predetermined temperature, side reaction such as polymer decomposition or solvent hydrogenolysis can be suppressed. The hydrogen pressure equal to or more than the predetermined value can accelerate a reaction rate. Its upper limit is preferably on the order of 30 MPa from an economic standpoint.

The hydrogenation catalyst and volatile components (the solvent, etc.) can be separated from the polymer solution after the hydrogenation reaction described above to obtain an aromatic hydrogenated polymer. The catalyst can be separated by a known approach such as filtration or centrifugation. It is desirable to minimize a residual catalytic metal concentration in the polymer, in consideration of staining, influence on mechanical physical properties, and the like. The concentration is preferably 10 ppm or lower, further preferably 1 ppm or lower.

After catalyst separation, known methods such as 1) a method of continuously removing the solvent from the polymer solution, and pelletizing the resulting concentrate by extrusion in a melted state with heating (also referred to as a "devolatilization extrusion method"), 2) a method of evaporating the solvent from the polymer solution to obtain bulks, followed by pelletization, 3) a method of adding a poor solvent to the polymer solution, or obtaining precipitates by the addition of a poor solvent to the polymer solution, followed by pelletization, 4) and a method of obtaining bulks by contact with hot water, followed by pelletization can be used as methods for purifying the polymer by separating volatile components such as the solvent from the obtained aromatic hydrogenated polymer solution. The production method according to a preferred embodiment of the present invention comprises forming a resin of the polymer by devolatilization extrusion after hydrogenation reaction. The devolatilization extrusion can be performed, for example, by introducing a polymer solution obtained in a polymerization tank, at a temperature kept at or elevated to 120°C to 180°C, to a devolatilization extruder equipped with a vent where volatile matter is removed. The production method according to another preferred embodiment of the present invention further comprises a concentration step between hydrogenation reaction and devolatilization extrusion.

The operation of separating the catalyst and volatile components is desirably performed in an inert gas or non-oxidizing gas atmosphere. Hydrogen, nitrogen, helium, or argon can be used as the inert gas or the non-oxidizing gas. The operation is desirably performed in an atmosphere of industrially inexpensive nitrogen or a reactive gas hydrogen.

The final rate of hydrogenation (which refers to a "final rate of aromatic hydrogenation") of the hydrogenated polymer obtained by the method according to some embodiments of the present invention is not particularly limited and is 90% or more, 91% or more, 92% or more, 93% or more, 94% or more, 95% or more, 96% or more, 97% or more, 98% or more, 99% or more, or 99.9% or more. In a preferred embodiment, the final rate of hydrogenation of the hydrogenated polymer is 93% or more. In a more preferred embodiment, the final rate of hydrogenation of the hydrogenated polymer is 95% or more. In a still more preferred embodiment, the final rate of hydrogenation of the hydrogenated polymer is 96% or more. In an even more preferred embodiment, the final rate of hydrogenation of the hydrogenated polymer is 97% or more. In a further preferred embodiment, the final rate of hydrogenation of the hydrogenated polymer is 98% or more. In a still further preferred embodiment, the final rate of hydrogenation of the hydrogenated polymer is 99% or more. In the most preferred embodiment, the final rate of hydrogenation of the hydrogenated polymer is 99.9% or more. The rate of hydrogenation can be determined by UV spectrometry before and after hydrogenation reaction, as described in Examples.

As mentioned above, in a preferred embodiment of the present invention, the initial rate of hydrogenation (which refers to an "initial rate of aromatic hydrogenation") of the hydrogenated polymer is not particularly limited and is 50% or more, 55% or more, 60% or more, 65% or more, 70% or more, 75% or more, 80% or more, 85% or more, 90% or more, 92% or more, 93% or more, 94% or more, 95% or more, 96% or more, 97% or more, 98% or more, 99% or more, or 99.9% or more. In an embodiment of the present invention, the initial rate of hydrogenation of the hydrogenated polymer refers to the rate of hydrogenation at 1 hour, 2 hours, 3 hours, 4 hours, 5 hours, 6 hours, 7 hours, 8 hours, 9 hours, 10 hours, 15 hours, or 20 hours after the start of hydrogenation reaction, though the initial rate of hydrogenation is not limited thereto. In one embodiment of the present invention, the initial rate of hydrogenation of the hydrogenated polymer is the rate of hydrogenation at 3 hours after the start of hydrogenation reaction. In one embodiment of the present invention, the initial rate of hydrogenation of the hydrogenated polymer is the rate of hydrogenation at 5 hours after the start of hydrogenation reaction. In one embodiment of the present invention, the initial rate of hydrogenation of the hydrogenated polymer is the rate of hydrogenation at 20 hours after the start of hydrogenation reaction. The reaction rate of hydrogenation reaction can be improved by pre-reducing the hydrogenation catalyst and using the hydrogenation catalyst that has undergone reduction treatment.

In a preferred embodiment of the present invention, the initial rate of hydrogenation of the hydrogenated polymer is 50% or more. In a more preferred embodiment, the initial rate of hydrogenation of the hydrogenated polymer is 55% or more. In a still more preferred embodiment, the initial rate of hydrogenation of the hydrogenated polymer is 60% or more. In an even more preferred embodiment, the initial rate of hydrogenation of the hydrogenated polymer is 65% or more. In a further preferred embodiment, the initial rate of hydrogenation of the hydrogenated polymer is 70% or more. In a still further preferred embodiment, the initial rate of hydrogenation of the hydrogenated polymer is 75% or more. In an even further preferred embodiment, the initial rate of hydrogenation of the hydrogenated polymer is 80% or more. In a furthermore preferred embodiment, the initial rate of hydrogenation of the hydrogenated polymer is 85% or more. In the most preferred embodiment, the initial rate of hydrogenation of the hydrogenated polymer is 90% or more. The rate of hydrogenation can be determined by UV spectrometry before and after hydrogenation reaction, as described in Examples.

### <Optical material and method for producing same>

One embodiment of the present invention provides a method for producing an optical material, comprising the aforementioned method for producing a hydrogenated polymer. In one embodiment of the present invention, the method for producing an optical material comprises
a method for producing a hydrogenated polymer by hydrogenating an aromatic ring of an aromatic vinyl compound polymer,
the aromatic vinyl compound polymer comprising a first monomer unit and a second monomer unit,
the method comprising:
   reducing a hydrogenation catalyst before use; and
   performing hydrogenation reaction using the aromatic vinyl compound polymer, a solvent, and the hydrogenation catalyst that has undergone reduction treatment to obtain a hydrogenated polymer.

The details of the method for producing a hydrogenated polymer are as described above.

The hydrogenated polymer obtained by the method according to some embodiments of the present invention can be appropriately mixed with, for example, an additive such as an antioxidant, a colorant, a mold release agent, a surfactant, or an antimicrobial agent to prepare an optical material composition. Since the resulting optical material composition has thermoplasticity, an optical article can be produced precisely and economically by various thermoforming techniques such as extrusion molding, injection molding, or secondary processing and molding of a sheet molded article. Specific examples of the purpose of the optical article include, but are not limited to, various light guide plates and light guides, front panels of displays, plastic lens substrates, optical filters, optical films, lighting covers, and illuminated signs. In one embodiment of the present invention, the optical material is an optical lens.

### Examples

Hereinafter, the present invention will be described further specifically with reference to Examples. The present invention is not particularly limited by these Examples given below. Methods for evaluating resins are as follows.
(1) The rate of aromatic hydrogenation was determined by UV spectrometry before and after hydrogenation reaction. Specifically, a resin was dissolved in tetrahydrofuran (THF) as a solvent, and an absorption spectrum at 260 nm was measured using a quartz cell. The ratio of an unhydrogenated aromatic ring was calculated by calibration using a copolymer resin before aromatic hydrogenation reaction. The equipment used in measurement was an ultraviolet-visible spectrophotometer "GENESYS 10S" manufactured by Thermo Fisher Scientific Inc., though the equipment is not particularly limited as long as it is an apparatus equivalent thereto.
(2) The weight average molecular weight (Mw) was determined by gel permeation chromatography (GPC). The detector used was a differential refractive index (RI) detector. The solvent used was THF, and calibration was performed using standard polystyrene. The equipment used in measurement was a high-performance liquid chromatograph system "Elite LaChrom" manufactured by Shimadzu Science East Corp., though the equipment is not particularly limited as long as it is an apparatus equivalent thereto.
(3) The glass transition point (Tgm) of a resin was determined by differential scanning calorimetry (DSC). The equipment used in measurement was "DSC7020" manufactured by SII Nanotechnology Inc. (currently, Hitachi High-Tech Science Corp.), though the equipment is not particularly limited as long as it is an apparatus equivalent thereto.

### <Aromatic vinyl compound polymer>

(Resin 1) Copolymer of styrene and maleic anhydride (manufactured by Polyscope Polymers BV, XIBOND120, styrene/maleic anhydride molar ratio = 93/7, weight average molecular weight = 163,000)
(Resin 2) Copolymer of styrene and maleic anhydride (manufactured by Polyscope Polymers BV, XIBOND140, styrene/maleic anhydride molar ratio = 85/15, weight average molecular weight = 140,000)
(Resin 3) Block copolymer of styrene and butadiene (manufactured by Denka Co., Ltd., Clearen 530L, styrene/butadiene molar ratio = 72.7/27.3, weight average molecular weight = 133,000)
(Resin 4) Copolymer of styrene and methyl methacrylate (manufactured by Toyo Styrene Co., Ltd., MS200, styrene/methyl methacrylate molar ratio = 8/2, weight average molecular weight = 258,000)

### <Preparation Example 1 Preparation of hydrogenation reaction starting material polymer solution>

0.5 parts by mass of resin 1 having a weight average molecular weight of 163,000 were dissolved in 2.75 parts by mass of methyl isobutyrate (manufactured by Tokyo Chemical Industry Co., Ltd.; hereinafter, referred to as "IBM"). Then, a water content was reduced from the polymer solution by distillation operation (distilling off 0.5 parts by mass by azeotropy). To the distilled/dehydrated polymer solution, 2.25 parts by mass of cyclohexane (manufactured by Tokyo Chemical Industry Co., Ltd.; hereinafter, referred to as "CH") were added to prepare a hydrogenation reaction starting material polymer solution corresponding to 10% by mass.

### <Example 1>

0.1 parts by mass of 2.0% by mass of Pd/ZrO₂ and 1.35 parts by mass of SWA Clean 150 (manufactured by Maruzen Petrochemical Co., Ltd., C9-C10 alkylcyclohexane mixture; hereinafter, referred to as "SWC") were added to a reaction vessel. The reaction vessel was purged with a mixed gas of hydrogen/nitrogen = 5/95 (V/V) at room temperature, and the catalyst was then pre-reduced by stirring at 180°C for 1 hour. After pre-reduction, the reaction vessel was cooled to room temperature and then charged with an IBM solution of resin 1 subjected to azeotropy and dehydration by the same operation as in Preparation Example 1 to prepare a hydrogenation reaction starting material polymer solution corresponding to 10% by mass (IBM/SWC ratio = 7/3). Then, hydrogenation reaction was performed for 44 hours under conditions involving a hydrogen pressure of 9.1 MPa and a temperature of 180°C. After hydrogenation reaction, the catalyst was removed from the polymer solution by filtration, and the reaction solution was added dropwise into an excess of methanol to deposit a resin. The obtained resin powder was dried under reduced pressure to obtain a dry resin powder. The obtained hydrogenated resin had a rate of aromatic hydrogenation of 84.4% at 3 hours after the start, a rate of aromatic hydrogenation of 92.3% at 5 hours after the start, a rate of aromatic hydrogenation of 96.9% at 20 hours after the start, a final rate of aromatic hydrogenation of 98.7% at 44 hours after the start, a weight average molecular weight of 122,000, and Tg of 145°C.

### <Examples 2 to 7>

Each hydrogenated polymer was obtained by pre-reducing the catalyst and then carrying out hydrogenation reaction in the same manner as in Example 1 except that the conditions were changed as described in Table 1.

### <Comparative Example 1>

A reaction vessel equipped with a stirrer was charged with 5.0 parts by mass of the starting material polymer solution, together with 0.1 parts by mass of 2.0% by mass of Pd/ZrO₂, followed by hydrogenation reaction for 44 hours under conditions involving a hydrogen pressure of 9.1 MPa and a temperature of 200°C. After hydrogenation reaction, the catalyst was removed from the polymer solution by filtration, and the reaction solution was added dropwise into an excess of isopropanol to deposit a resin. The obtained resin powder was dried under reduced pressure to obtain a dry resin powder. The obtained resin had a rate of aromatic hydrogenation of 79.1% at 3 hours after the start, a rate of aromatic hydrogenation of 85.0% at 5 hours after the start, a rate of aromatic hydrogenation of 97.9% at 20 hours after the start, a final rate of aromatic hydrogenation of 98.3% at 44 hours after the start, a weight average molecular weight of 116,000, and Tg of 146°C.

### <Comparative Examples 2 to 7>

Each hydrogenated polymer was obtained by carrying out hydrogenation reaction without pre-reducing the catalyst in the same manner as in Comparative Example 1 except that the conditions were changed as described in Table 2.

Results obtained by Examples 1 to 7 and Comparative Examples 1 to 7 are shown in Table 1 or 2.

### [Table 1]

**Table 1**

| | Pre-reduction step | | | | | | | Hydrogenation reaction step | | | | | | | Reaction results | |
|---|---|---|---|---|---|---|---|---|---|---|---|---|---|---|---|---|
| | Catalyst | | Solvent | | Composition of reducing gas | Reduction temperature | Reduction time | Starting material polymer solution | | | | | Hydrogen pressure | Reaction temperature | Initial rate of aromatic hydrogenation | Final rate of aromatic hydrogenation |
| | Amount added parts by mass | Amount of Pd supported wt% | Second solvent parts by (after dehy mass ydration) | | Hydrogen/ nitrogen V/V | °C | hr | Resin species | First solvent parts by (after dehydration | by mass | Resin concentratio wt% | First/ second V/V | MPa | °C | At 3h % | At 44h % |
| Example 1 | 0.1 | 2 | SWC | 1.35 | 5/95 | 180 | 1 | Resin 1 | IBM | 3.65 | 10 | 7/3 | 9.1 | 180 | 84.4 | 98.7 |
| Example2 | 0.1 | 2 | SWC | 2.25 | 5/95 | 180 | 1 | Resin 1 | IBM | 2.25 | 10 | 5/5 | 9.1 | 180 | 54.0 | 97.5 |
| Example3 | 0.1 | 2 | SWC | 2.25 | 5/95 | 180 | 1 | Resin 1 | IBM | 2.25 | 10 | 5/5 | 9.1 | 200 | 66.6 | 98.4 |
| Example4 | 0.1 | 2 | SWC | 0.90 | 6/94 | 180 | 1 | Resin 2 | IBM | 4.10 | 10 | 8/2 | 9.1 | 200 | 94.6 | 96.8 |
| Example5 | 0.1 | 2 | SWC | 1.35 | 6/94 | 180 | 1 | Resin 2 | IBM | 3.65 | 10 | 7/3 | 9.1 | 200 | 92.6 | 93.3 |
| Example6 | 0.1 | 2 | SWC | 1.35 | 5/95 | 180 | 1 | Resin 3 | IBM | 3.65 | 10 | 7/3 | 9.1 | 180 | 85.1 | 98.5 |
| Example7 | 0.1 | 2 | SWC | 1.35 | 5/95 | 180 | 1 | Resin 4 | IBM | 3.65 | 10 | 7/3 | 9.1 | 180 | 87.2 | 99.1 |

### [Table 2]

**Table 2**

| | Hydrogenation reaction step | | | | | | | | | | | | Reaction results | |
|---|---|---|---|---|---|---|---|---|---|---|---|---|---|---|
| | Catalyst | | Starting material polymer solution preparation | | | | | | | | Hydrogen pressure | Reaction temperature | Initial rate of aromatic hydrogenation | Final rate of aromatic hydrogenation |
| | Amount added parts by mass | Amount of Pd supported wt% | Resin species | First parts (after dehydration) solvent by mass ehydration) | | Second parts by (after dehydration) by solvent mass | | Starting material solution parts by mass | Resin concentratio wt% | First/ second V/V | MPa | °C | At 3h % | At 44h % |
| Comparative Example 1 | 0.1 | 2 | Resin 1 | IBM | 3.15 | SWC | 1.35 | 5.0 | 10 | 7/3 | 9.1 | 200 | 79.1 | 98.3 |
| Comparative Example 2 | 0.1 | 2 | Resin 1 | IBM | 2.25 | SWC | 2.25 | 5.0 | 10 | 5/5 | 9.1 | 180 | 47.7 | 98.8 |
| Comparative Example 3 | 0.1 | 2 | Resin 1 | IBM | 2.25 | CH | 2.25 | 5.0 | 10 | 5/5 | 9.1 | 180 | 49.3 | 99.1 |
| Comparative Example 4 | 0.1 | 5 | Resin 1 | IBM | 2.25 | CH | 2.25 | 5.0 | 10 | 5/5 | 9.1 | 180 | 38.1 | 94.7 |
| Comparative Example 5 | 0.1 | 2 | Resin 2 | IBM | 3.15 | SWC | 1.35 | 5.0 | 10 | 7/3 | 9.1 | 200 | 87.8 | 97.6 |
| Comparative Example 6 | 0.1 | 2 | Resin 3 | IBM | 3.15 | SWC | 1.35 | 5.0 | 10 | 7/3 | 9.1 | 180 | 78.7 | 98.3 |
| Comparative Example 7 | 0.1 | 2 | Resin 4 | IBM | 3.15 | SWC | 1.35 | 5.0 | 10 | 7/3 | 9.1 | 180 | 80.4 | 99.4 |

Figure 1 shows the relationship between the hydrogenation reaction time and the rate of aromatic hydrogenation as to resin 1. As is evident therefrom, the reaction rate of hydrogenation reaction can be improved by pre-reducing the hydrogenation catalyst and using the hydrogenation catalyst that has undergone reduction treatment.

The present invention was found able to achieve efficient production by improving a hydrogenation reaction rate in a method for producing a hydrogenated polymer by hydrogenating an aromatic ring (aromatic hydrogenation) of an aromatic vinyl compound polymer. Furthermore, the present invention shortened a reaction time and thereby also produced an effect of being capable of reducing a damage on the polymer, such as decrease in molecular weight. Furthermore, the hydrogenated polymer obtained by the method of the present invention has sufficient heat resistance and is suitable for use in an optical material.

## Claims

1. A method for producing a hydrogenated polymer by hydrogenating an aromatic ring of an aromatic vinyl compound polymer, wherein:
the aromatic vinyl compound polymer comprising a first monomer unit and a second monomer unit,
the method comprising:
reducing a hydrogenation catalyst before use; and performing hydrogenation reaction using the aromatic vinyl compound polymer, a solvent, and the hydrogenation catalyst that has undergone reduction treatment to obtain a hydrogenated polymer, wherein
the solvent is a mixed solvent comprising at least one first solvent and at least one second solvent, wherein
the first solvent is a solvent that dissolves an unhydrogenated aromatic vinyl compound polymer, and
the second solvent is a solvent that dissolves the hydrogenated polymer.

2. The method for producing a hydrogenated polymer according to claim 1, wherein the at least one first solvent comprises one or more members selected from the group consisting of methyl acetate, ethyl acetate, butyl acetate, and methyl isobutyrate.

3. The method for producing a hydrogenated polymer according to claim 1 or 2, wherein the at least one second solvent comprises one or more members selected from the group consisting of cyclohexane, C9 to C10 alkylcyclohexane, C7 to C15 monoalkylcyclohexane, C8 to C15 dialkylcyclohexane, C9 to C15 trialkylcyclohexane, C10 to C15 tetraalkylcyclohexane, cyclooctane, C9 to C15 monoalkylcyclooctane, C10 to C15 dialkylcyclooctane, C11 to C15 trialkylcyclooctane, C12 to C15 tetraalkylcyclooctane, n-octane, and n-decane.

4. The method for producing a hydrogenated polymer according to any one of claims 1 to 3, wherein the first solvent has a boiling point of 50°C or higher and an ignition point of 400°C or higher.

5. The method for producing a hydrogenated polymer according to any one of claims 1 to 4, wherein the second solvent has a boiling point of 80°C or higher and an ignition point of 230°C or higher.

6. The method for producing a hydrogenated polymer according to any one of claims 1 to 5, wherein the first monomer is selected from the group consisting of styrene, α-methylstyrene, chlorostyrene, 4-methylstyrene, 4-tert-butylstyrene, and 4-methoxystyrene.

7. The method for producing a hydrogenated polymer according to any one of claims 1 to 6, wherein the second monomer is selected from the group consisting of maleic anhydride, butadiene, cyclopentadiene, and isoprene.

8. The method for producing a hydrogenated polymer according to any one of claims 1 to 7, wherein the aromatic vinyl compound polymer is selected from the group consisting of a copolymer of styrene and maleic anhydride, a copolymer of styrene and butadiene, and a copolymer of styrene and isoprene.

9. The method for producing a hydrogenated polymer according to claim 8, wherein the aromatic vinyl compound polymer is a copolymer of styrene and maleic anhydride.

10. The method for producing a hydrogenated polymer according to any one of claims 1 to 9, wherein in the aromatic vinyl compound polymer, a polymerization ratio (mol%) between the first monomer unit and the second monomer unit is 70:30 or more and less than 100:0.

11. The method for producing a hydrogenated polymer according to any one of claims 1 to 10, further comprising forming a resin of the polymer by devolatilization extrusion after the hydrogenation reaction.

12. The method for producing a hydrogenated polymer according to any one of claims 1 to 11, further comprising a concentration step between the hydrogenation reaction and the devolatilization extrusion.

13. The method for producing a hydrogenated polymer according to any one of claims 1 to 12, wherein a mass ratio of the at least one first solvent to the at least one second solvent (first solvent : second solvent) is 1:9 to 9:1.

14. The method for producing a hydrogenated polymer according to any one of claims 1 to 13, wherein the hydrogenation catalyst is a solid catalyst on which palladium, platinum, ruthenium, rhodium, or nickel is supported.

15. A method for producing an optical material, comprising a method for producing a hydrogenated polymer according to any one of claims 1 to 14.

16. The method for producing an optical material according to claim 15, wherein the optical material is an optical lens.
